# EUROPÄISCHE PATENTSCHRIFT

(11) **EP 1 039 860 B1**
(45) Veröffentlichungstag und Bekanntmachung des Hinweises auf die Patenterteilung: **16.04.2003**
(21) Anmeldenummer: 98966575.7
(22) Anmeldetag: 22.12.1998
(51) Int. Cl.: A61F 7/00, B65G 1/137, B65B 35/04, B65B 35/54, B65G 47/51, A61J 7/00

(54) **VORRICHTUNG ZUM AUTOMATISCHEN KOMMISSIONIEREN VON STÜCKGUT**
AUTOMATIC PIECE GOODS COMMISSIONING DEVICE
DISPOSITIF POUR LA PREPARATION AUTOMATIQUE DE COMMANDES DE MARCHANDISES DE DETAIL

(30) Priorität: 24.12.1997 DE 19757963
(43) Veröffentlichungstag der Anmeldung: 04.10.2000
(73) Patentinhaber: P+P Materialfluss-Systeme GmbH, 04639 Schmölln-Nitzschka (DE)
(72) Erfinder: PREISS, Manfred, D-90574 Rosstal (DE)
(74) Vertreter: Hanke, Hilmar
(86) Internationale Anmeldenummer: DE9803774
(87) Internationale Veröffentlichungsnummer: WO99033418

(56) Entgegenhaltungen:
- EP-A- 0 719 537
- WO-A-97/30914
- GB-A- 2 300 170
- US-A- 4 189 259

## Beschreibung

Die Erfindung betrifft eine Vorrichtung zum automatischen Kommissionieren von Stückgut mit einer Vorratsstation mit mehreren unterschiedliche Stückgut-Sorten enthaltenden Behältern oder Regalen sowie mit einer Aufnahmeeinheit und einer Puffer-Sortier-Einrichtung gemäß Oberbegriff des Anspruchs 1.

Im Klinikbereich werden Medikamentengaben in einzelnen Klinikabteilungen vom Pflegepersonal für Patienten dieser Abteilung in Schalen mit Mulden nach der Tageseinnahmezeit- Früh, Mittag, Abend, Nacht - sortiert. Dies beansprucht das Pflegepersonal ca. 2 Stunden pro Tag und Abteilung und bedingt ein Medikamentenlager in jeder Abteilung, zumindest in begrenzter Menge und Sorte, was zu einer kostspieligen Lagerhaltung und der Gefahr des Überschreitens des Verfalldatums führt. Da auf die Vorratshaltung in jeder Abteilung Rücksicht genommen werden muß, wird auch in der Klinikapotheke oder Versorgerapotheke der Klinik der Bestand an Medikamenten entsprechend hoch gehalten. Für die einzelnen Abteilungen werden einmal oder sogar zweimal täglich Packungen für das Abteilungslager kommissioniert.

Bekannt ist ein Kommissionierautomat für Medikamente (US-Firma BAXTER), welcher einzelne Kunststoffbehälter für Medikamente aufweist. In den Behältern befindet sich jeweils eine Medikamentensorte als offenes, d.h. unverpacktes Schüttgut, welches von mindestens zwei Apothekern schriftlich bestätigt werden muß. Jeder Behälter besitzt eine radförmige Entnahmevorrichtung mit einem elektromotorbetriebenen Auswerfer, welcher von der Herstellerfirma auf das zu kommissionierende Gut eingestellt und bei Kommission des Schüttguts in Betrieb genommen wird und eine Einzelpille in einen Zuführtrichter befördert, durch welchen die Pille dann in eine dem Patienten zugeordnete Kunststofftüte rutscht.

Von Nachteil sind die aufwendige Kontrolle, die aufwendige Geräteeinstellung sowie die aufwendige bauliche Konstruktion, weshalb nur vergleichsweise wenige Medikamentensorten und nur oftmalig verlangte Medikamente bevorratet werden können und automatisch kommissionierbar sind. Die Anwendung eines solchen Automaten ist bei einem Kliniksortiment auf 900 bis 1500 Spezialitäten eingeschränkt.

Zu berücksichtigen und von Nachteil ferner ist, daß nur offenes unverpacktes Schüttgut kommissioniert werden kann, d.h. offene Pillen, Kapseln, Tabletten, welche in die entsprechenden Abteile des Automaten eingefüllt bzw. geschüttet werden. Im Klinikbereich stehen mithin nur ca. 200 unverpackte Medikamentensorten zur Verfügung. Die restlichen vorverpackten Medikamentensorten scheiden für einen automatischen hygienischen Kommissioniervorgang von vorneherein aus und müssen von Hand des Pflegepersonals "kommissioniert" werden.

Offene unverpackte Pillen, etc. unterliegen darüberhinaus bei einem Kommissionieren einem gewissen Verschleiß bzw. gegenseitigen Abrieb. Dadurch kann die zu verabreichende Einzeldosis für einen Patienten nicht exakt eingehalten werden. Da ferner nur ein einziger Zuführtrichter für sämtliche Kunststofftüten vorgesehen ist, kommt es gegebenenfalls zu einer Crosskontamination, wenn nämlich im Zuführtrichter Reste des einen Medikaments mit einem später kommissionierten anderen Medikament in Berührung kommen. Schließlich müssen die kommissionierten Kunststofftüten weiter manuell behandelt, beschriftet und verteilt werden. Verwechslungsgefahr der kommissionierten Pillen bis zum Ort des Patienten ist nicht ausgeschlossen.

Ausgehend vom vorgenannten Stand der Technik wird gemäß PCT/DE96/02473 ein Verfahren und eine Vorrichtung zum automatischen Kommissionieren von singulärem Stückgut, insbesondere einer Einzelpille, aus einer Vorratsstation mit mehreren Behältern vorgeschlagen, welches bzw. welche dadurch gekennzeichnet ist, daß vorausgewählte, plane Stückgut-Packungen gleicher Sorte - sogenannte "Blisterverpackungen" - in zugeordneten Behältern in Form von im wesentlichen vertikalen Lagerschächten gestapelt werden, daß eine Blisterverpackung eines zu kommissionierenden singulären Stückguts in eine außerhalb des Stapels gelegene seitliche Entnahmestellung verschoben wird, daß eine Auffangschale unter dem zu kommissionierenden, in der Entnahmestellung befindlichen Stückgut positioniert wird, daß eine den Lagerschächten zugeordnete Entnahmeeinheit mit einem Entnahmefinger über dem zu kommissionierenden, in der Entnahmestellung befindlichen Stückgut positioniert und der Entnahmefinger nach unten zwecks Trennung des singulären Stückguts von der restlichen Blisterverpackung gegen ein Gegenlager bewegt und das abgetrennte Stückgut in einer vorbestimmten Mulde der Auffangschale aufgefangen wird. Die mit kommissionierten Stückgütern versehene Auffangschale wird mittels der Entnahmeeinheit zu einer Übergabestation gefahren und der Übergabestation übergeben. An der Übergabestation wird die Auffangschale abgedeckt und bedruckt und vorzugsweise über einen verschließbaren Wagen in die entsprechende Klinikabteilung in den Bereich des Endverbrauchers, insbesondere Patienten, gebracht.

Es hat sich nun gezeigt, daß die Positionierung der Auffangschale in jeder gewünschten Entnahmestellung unmittelbar unter der Vorrichtung zum Trennen des Stückguts vom Rest der Blisterverpackung und der Weitertransport der kommissionierte Stückgutsorten enthaltenden offenen Auffangschale konstruktiv nur schwierig zu bewerkstelligen ist.

Aufgabe der Erfindung ist die Schaffung einer Vorrichtung zum automatischen Kommissionieren von Stückgut aus einer Vorratsstation mit mehreren, unterschiedliche Stückgut-Sorten enthaltenden Behältern oder Regalen, bei welcher eine einfach gestaltete Zusatzvorrichtung die entnommenen bzw. kommissionierten Stückgüter zuverlässig weiterbehandelt und ver packt.

Gelöst wird die der Erfindung zugrundeliegende Aufgabe durch die im Anspruch 1 angegebenen Mittel.

Vorteilhaft weitergebildet wird der Erfindungsgegenstand durch die konstruktiven Maßnahmen nach den Ansprüchen 2 bis 10.

Wesen der Erfindung ist, daß die Aufnahmeeinheit ein Ausgabe-Förderband der Kommissioniervorrichtung ist, wobei ein ausgewähltes Fach der Puffer-Sortier-Einrichtung einerseits unter dem ausgangsseitigen Ende des Ausgabe-Förderbands durch eine Drehstellbewegung positionierbar und andererseits durch eine weitere Drehstellbewegung über einem zweiten Förderband positionierbar und der Stückgut-Inhalt des ausgewählten Fachs nach Sortierung und gegebenenfalls Pufferung in der Puffer-Sortier-Einrichtung bei geöffnetem Fach auf das zweite Förderband für einen Transport zur Verpackungsstation ausgebbar ist.

Auf dem Förderband werden vorzugsweise unverpackte singuläre Stückgüter, insbesondere Pillen, gegebenenfalls in beliebiger Reihenfolge, der Puffer-Sortier-Einrichtung zugeführt und in der Puffer-Sortier-Einrichtung in ausgewählte Fächer abgegeben, sortiert und in diesen Fächern zwischengelagert.

Um zu verhindern, daß kommissionierte neben die Puffer-Sortier-Vorrichtung fallende Stückgüter kontaminiert werden bzw. verloren gehen, kann zweckmäßigerweise unter der Puffer-Sortier-Einrichtung eine Sicherungsschale angeordnet sein.

Die Fächer können einen öffenbaren Klappboden aufweisen, wobei auch zumindest eine öffenbare Seitenwand bei den Fächern vorgesehen sein kann, und gegebenenfalls mehrere Fächer gleichzeitig geöffnet werden können.

Bevorzugt verläuft das zweite Förderband quer zum ersten Förderband, und es sind beide Förderbänder im wesentlichen horizontal angeordnet.

Das ausgangsseitige Ende des zweiten Förderbands ist über der Verpackungsstation angeordnet.

Die Verpackungsstation weist einen Fülltrichter auf.

Die Anordnung ist nun so getroffen, daß in der Verpackungsstation eine Auffangschale unter dem Ende des zweiten Förderbands bzw. unter zumindest einem Fach der Puffer-Sortier-Einrichtung gegebenenfalls unter Zwischenordnung eines vorhandenen Fülltrichters positioniert werden kann, wobei die Auffangschale bevorzugt mehrere Einzelfächer aufweist.

Die Auffangschale ist horizontal zumindest in einer Richtung hin- und herversetzbar ist, um ein bestimmtes Stückgut in einem bestimmten Einzelfach am Ende des zweiten Förderbands zuverlässig aufzufangen.

Durch die Erfindung wird also eine Kommissioniereinrichtung geschaffen, wobei eine Übergabe eines beispielsweise abgeschnittenen oder ausgedrückten Kommissioniergutes, insbesondere einer Einzelpille aus einer Blisterverpackung, nicht direkt in eine Sammelschale, sondern auf ein Sammelband erfolgt. Es transportiert das Sammelband das Kommissioniergut bis zu einer Puffereinrichtung, welche auch die Funktion eines Sortierens übernehmen kann. Die Puffer-Sortier-Einrichtung ist vorzugsweise eine ringförmige Anordnung bestehend aus zumindest zwei Einzelfächern, wobei die ringförmige Anordnung drehbar ist, aber auch zweidimensional bzw. plan hin- und herbeweglich sein kann. Bei ringförmiger Anordnung können Einzelfächer auch radial versetzbar sein. Somit kann durch Drehung und/oder Linearverschiebung jedes der Einzelfächer unterhalb des Endes des Sammelbandes positioniert und ein gewähltes Einzelfach dem zu erwartenden Kommissioniergut zugeordnet werden. Die Einzelfächer können seitlich oder einzeln oder gemeinsam geöffnet werden und können das gesammelte Kommissioniergut freigeben. Das Öffnen der Einzelfächer folgt einem vorgegebenen Muster, welches durch die gewünschte Reihenfolge des Kommissioniergutes bestimmt wird. Das freigegebene Kommissioniergut aus mehreren Puffereinrichtungen bzw. Einzelfächern oder mehreren Takten der Puffer-Sortier-Einrichtung wird zusammengeführt und einer Verpackungsmaschine zugeführt. In der Verpackungsstation wird eine Auffangschale frei unter dem Fülltrichter dergestalt positioniert, daß eine Zuordnung des Kommissioniergutes zu den Fächern der Auffangschale erfolgt.

Die Erfindung ist grundsätzlich anwendbar bei jeder Art einer Kommissioniervorrichtung, bei welcher aus einem Lager ein Kommissioniergut, wie auch immer, entnommen und einem Förderband zugeführt wird, gegebenenfalls in beliebiger Reihenfolge, um zum Beispiel kurze Entnahmewege und/oder kurze Entnahmezeiten aus einem Lager einzurichten. Je nach der Reihenfolge der Entnahme wird auch die Puffer-Sortier-Einrichtung vom Rechner angesteuert, um die auf dem Sammelband transportierten beliebigen bzw. unterschiedlichen Kommissioniergüter gezielt bzw. sortiert einzusammeln, die dann unverzüglich oder zeitversetzt (mit Pufferwirkung) wieder sortiert abgegeben werden.

Zwar ist aus EP-A 0 719 537 eine Kommissioniervorrichtung der gattungsgemäßen Art bekannt. Die bekannte Kommissioniervorrichtung besitzt jedoch eine Aufnahmeeinheit in Form eines Drehtellers, der zum Fördern der Stückgüter die Fliehkraft ausnützt. Zwei Förderbänder mit zwischengeordneter Puffer-Sortier-Einrichtung, wie dies bei der Erfindung der Fall ist, ist der bekannten Kommissioniervorrichtung fremd. Letzeres gilt auch für die bekannte Verpackungsvorrichtung nach GB-A 2 300 170.

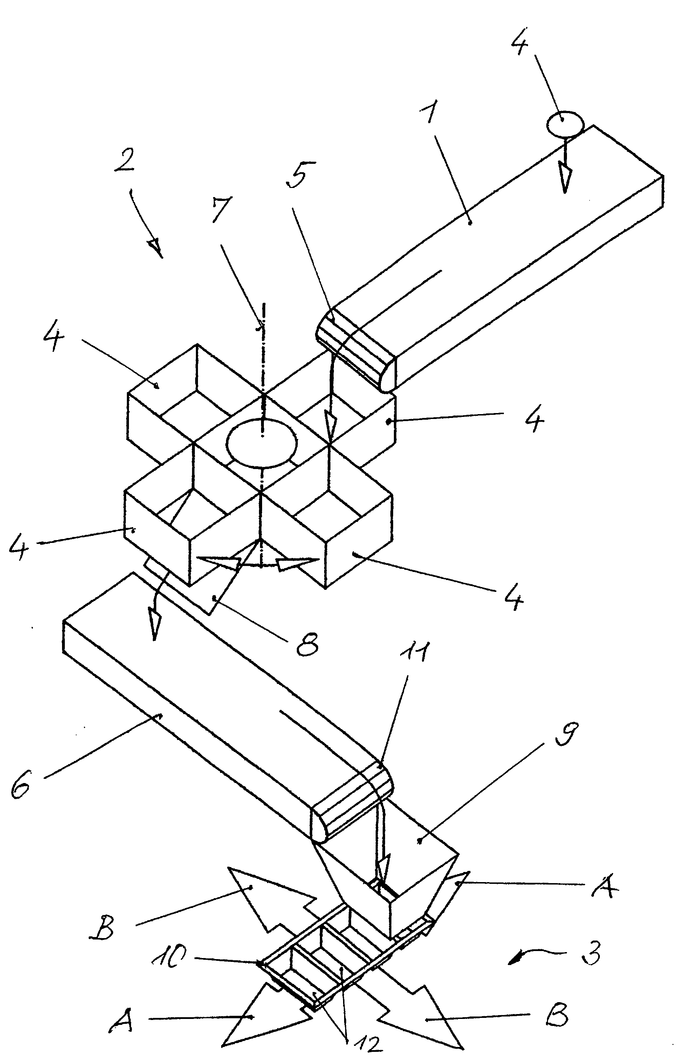

Die Erfindung wird nachfolgend anhand eines Ausführungsbeispiels unter Bezugnahme auf die beigefügte Zeichnung näher beschrieben, deren einzige Figur eine Zusatzeinrichtung einer Kommissioniervorrichtung der eingangs genannten Gattung zeigt.

Gemäß Zeichnung umfaßt die Zusatzeinrichtung ein Ausgabe-Förderband 1, welches unterseitig einer (nicht veranschaulichten) Kommissioniervorrichtung zugeordnet ist, die Stückgut in einer Vorratsstation in mehreren Behältern oder Regalen enthält und aus der Stückgut aus den Behältern oder Regalen automatisch entnommen und auf das Ausgabe-Förderband 1 gelangen können.

Dem Ausgabe-Förderband 1 ist ausgangsseitig eine Puffer-Sortier-Einrichtung 2 zugeordnet ist, welche ihrerseits an eine Verpackungsstation 3 für kommissionierte Stückgüter 4 angeschlossen ist.

Auf dem Förderband 1 werden vorzugsweise unverpackte singuläre Stückgüter 4 der Puffer-Sortier-Einrichtung 2 zugeführt und in der Puffer-Sortier-Einrichtung in ausgewählte Fächer 4 sortiert abgegeben und in diesen Fächern zwischengelagert.

Die Puffer-Sortier-Einrichtung 2 weist vier Fächer 4 auf, wobei jedes Fach 4 unter dem Förderbandende 5 durch Drehen um die vertikale Achse 7 der Puffer-Sortier-Einrichtung 2 gezielt positionierbar ist.

Die Fächer 4 sind auch über einem zweiten Förderband 6 positionierbar, welches mit Abstand quer zum ersten Förderband 1 an tieferer Stelle angeordnet ist.

Sämtliche Fächer 4 weisen einen Klappboden 8 auf, welcher gesammeltes bzw. sortiertes Stückgut auf das zweite Förderband 6 freigeben kann.

Das Ende 11 des zweiten Förderbands 6 ist über der Verpackungsstation 3 angeordnet, wobei ein Fülltrichter 9 unter dem Ende 11 des zweiten Förderbands 6 zwischengeordnet ist.

Unter dem Fülltrichter befindet sich eine Auffangschale 10 mit mehreren Einzelfächern 12, welche ausgerichtet exakt unter der Austrittsöffnung des Fülltrichters 9 durch Versetzung der Auffangschale 10 in Richtung A plaziert werden können.

Für breitere Einzelfächer einer (anderen) Auffangschale kann die Auffangschale unter Beibehaltung des Fülltrichters 9 auch in der Richtung B versetzt werden, um ein Einzelfach komplett mit einer bestimmten Stückgutsorte aufzufüllen.

Ersichtlich befindet sich die Auffangschale in der Verpackungstation fernab von der eigentlichen (nicht veranschaulichten) Kommissionier- bzw. Entnahmevorrichtung, so daß beliebige Varianten einer Kommissionieranlage mit Zwischenspeicher und Zwischensortiereinrichtung mit Hilfe einfacher konstruktiver Mittel einrichtbar sind.

Sämtliche Steuervorgänge der Zusatzeinrichtung werden von einem zentralen Rechner der Kommisisionieranlage durchgeführt.

## Patentansprüche

1. Vorrichtung zum automatischen Kommissionieren von Stückgut (4) mit einer Vorratsstation mit mehreren, unterschiedliche Stückgut-Sorten enthaltenden Behältern oder Regalen, sowie mit einer Aufnahmeeinheit unter der Vorratsstation, von der aus Stückgut über eine Puffer-Sortier-Einrichtung (2) einem Behältnis zuführbar ist, wobei die Puffer-Sortier-Einrichtung um eine Vertikalachse drehbare Fächer (4) aufweist, welche unter dem Ausgang der Aufnahmeeinheit positionierbar sind und für ein selbsttätiges Ausgeben von Stückgut geöffnet werden können,
**dadurch gekennzeichnet,**
**daß** die Aufnahmeeinheit ein Ausgabe-Förderband (1) der Kommissioniervorrichtung ist, wobei ein ausgewähltes Fach (4) der Puffer-Sortier-Einrichtung (2) einerseits unter dem ausgangsseitigen Ende des Ausgabe-Förderbands (1) durch eine Drehstellbewegung positionierbar und andererseits durch eine weitere Drehstellbewegung über einem zweiten Förderband (6) positionierbar und der Stückgut-Inhalt des ausgewählten Fachs (4) nach Sortierung und gegebenenfalls Pufferung in der Puffer-Sortier-Einrichtung (2) bei geöffnetem Fach (4) auf das zweite Förderband (6) für einen Transport zur Verpackungsstation (3) ausgebbar ist.

2. Vorrichtung nach Anspruch 1,
**dadurch gekennzeichnet,**
**daß** auf dem Ausgabe-Förderband (1) vorzugsweise unverpackte singuläre Stückgüter (4), insbesondere Pillen, der Puffer-Sortier-Einrichtung (2) zugeführt und in der Puffer-Sortier-Einrichtung in ausgewählte Fächer (4) abgegeben, sortiert und in diesen Fächern zwischengelagert werden.

3. Vorrichtung nach Anspruch 1 oder 2,
**dadurch gekennzeichnet,**
**daß** unter der Puffer-Sortier-Einrichtung (2) eine Sicherungsschale angeordnet ist.

4. Vorrichtung nach einem der Ansprüche 1 bis 3,
**dadurch gekennzeichnet,**
**daß** die Fächer (4) einen öffenbaren Klappboden (8) und/oder zumindest eine öffenbare Seitenwand aufweisen, wobei gegebenenfalls mehrere Fächer (4) gleichzeitig geöffnet werden können.

5. Vorrichtung nach einem der Ansprüche 1 bis 4,
**dadurch gekennzeichnet,**
**daß** das erste und das zweite Förderband (1, 6) im wesentlichen horizontal angeordnet sind, wobei das zweite Förderband (6) vorzugsweise quer zum ersten Förderband (1) verläuft.

6. Vorrichtung nach einem der Ansprüche 1 bis 5,
**dadurch gekennzeichnet,**
**daß** das ausgangsseitige Ende (11) des zweiten Förderbands (6) über der Verpackungsstation (3) angeordnet ist.

7. Vorrichtung nach Anspruch 6,
**dadurch gekennzeichnet,**
**daß** die Verpackungsstation (3) einen Fülltrichter (9) aufweist.

8. Vorrichtung nach einem der Ansprüche 1 bis 7,
**dadurch gekennzeichnet,**
**daß** in der Verpackungsstation eine Auffangschale (10) unter dem ausgangsseitigen Ende (11) des zweiten Förderbands (6) oder unter zumindest einem Fach (4) der Puffer-Sortier-Einrichtung (2) gegebenenfalls unter Zwischenordnung eines Fülltrichters positionierbar ist.

9. Vorrichtung nach Anspruch 8,
**dadurch gekennzeichnet,**
**daß** die Auffangschale (10) Einzelfächer (12) aufweist.

10. Vorrichtung nach Anspruch 8 oder 9,
**dadurch gekennzeichnet,**
**daß** die Auffangschale (10) zumindest in einer Richtung (A bzw. B) versetzbar ist.

## Claims

1. Automatic piece goods commissioning device comprising a storage station having a number of containers or shelves containing different types of piece goods (4), and also comprising a receiving unit situated below the storage station, from which the piece goods can be passed, via a buffer-sorter (2), to a container, which buffer-sorter exhibits compartments (4) which can be rotated about a vertical axis and which can be positioned below the output of the receiving unit and can be opened for automatic dispensing of piece goods,
**characterized in that**
the receiving unit is a dispensing conveyor (1) of the commissioning device, and a selected compartment (4) of the buffer-sorter (2) can be positioned, on the one hand, below the exit end of the dispensing conveyor (1) by a defined rotary movement and, on the other hand, can be moved, by another defined rotary movement, to a position above a second conveyor belt (6) and the item present in the selected compartment (4) can, after sorting and, optionally, buffering in the buffer-sorter (2), be dispensed through the opened compartment (4) onto the second conveyor belt (6) for transportation to the packaging station (3).

2. A commissioning device as defined in claim 1,
**characterized in that**
preferably unpacked single piece goods (4), particularly pellets, are fed by the dispensing conveyor (1) to the buffer-sorter (2) and are placed in the buffer-sorter in selected compartments (4) thereof and are sorted and stored in these compartments.

3. A commissioning device as defined in claim 1 or claim 2,
**characterized in that**
a safety tray is disposed underneath the buffer-sorter (2).

4. A commissioning device as defined in any one of claims 1 to 3,
**characterized in that**
the compartments (4) exhibit an openable base flap (8) and/or at least one openable sidewall, and, optionally, more than one compartment (4) can be open at the same time.

5. A commissioning device as defined in any one of claims 1 to 4,
**characterized in that**
the first and second conveyor belts (1, 6) are substantially horizontal, and the second conveyor belt (6) is preferably at right angles to the first conveyor belt (1).

6. A commissioning device as defined in any one of claims 1 to 5,
**characterized in that**
the exit end (11) of the second conveyor belt (6) is disposed above the packaging station (3).

7. A commissioning device as defined in claim 6,
**characterized in that**
the packaging station (3) is provided with a hopper (9).

8. A commissioning device as defined in any one of claims 1 to 7,
**characterized in that,**
in the packaging station, a catch pan (10) can be placed at a position underneath the outlet end (11) of the second conveyor belt (6) or a position underneath at least one compartment (4) of the buffer-sorter (2) optionally with interposition of a hopper.

9. A commissioning device as defined in claim 8,
**characterized in that**
the catch pan (10) has individual compartments 12.

10. A commissioning device as defined in claim 8 or claim 9,
**characterized in that**
the catch pan (10) is displaceable in at least one direction (A or B).

## Revendications

1. Dispositif pour la préparation automatique de commandes de marchandises de détail (4) comportant une station de réserve avec plusieurs récipients ou étagères contenant différentes sortes de marchandises de détail et comportant également une unité de réception située en dessous de la station de réserve à partir de laquelle station on peut transmettre de la marchandise en détail via un dispositif de tri amorti (2) vers un récipient, où le dispositif de tri amorti comporte des compartiments (4) susceptibles d'être tournés autour d'un axe vertical ; lesquels compartiments peuvent être positionnés en dessous de la sortie de l'unité de réception et ouverts pour une distribution automatique de marchandises de détail,
**caractérisé en ce que**
l'unité de réception est une bande de transport de distribution (1) du dispositif pour la préparation de marchandises, où on peut, d'une part, positionner par un mouvement de réglage rotatif, un compartiment choisi (4) du dispositif de tri amorti (2) en dessous de l'extrémité du coté de la sortie, et d'autre part on peut positionner ledit compartiment par un autre mouvement de réglage rotatif, au dessus d'une deuxième bande de transport (6) et ou on peut distribuer le contenu de marchandises de détail du compartiment choisi (4) après le tri et un amortissement éventuel dans le dispositif de tri amorti (2), et lorsque le compartiment (4) est ouvert, sur la deuxième bande de transport (6) pour être transporté vers la station d'emballage (3).

2. Dispositif selon la revendication 1,
**caractérisé en ce que**
l'on conduit sur la bande de transport de distribution (1), de préférence, des marchandises de détail (4) individuelles non emballées, notamment des pilules, vers le dispositif de tri amorti (2) et **en ce que** l'on distribue et trie ces marchandises dans le dispositif de tri amorti (2) vers des compartiments choisis (4) et **en ce que** l'on entrepose ces marchandises dans ces compartiments.

3. Dispositif selon la revendication 1 ou 2,
**caractérisé en ce que**
l'on a déposé en dessous du dispositif de tri amorti (2), une coupelle de sécurité.

4. Dispositif selon une des revendications 1 à 3,
**caractérisé en ce que**
les compartiments (4) comportent un fond pliant (8) susceptible d'être ouvert et / ou au moins une paroi latérale susceptible d'être ouverte , où l'on peut éventuellement ouvrir plusieurs compartiments (4) simultanément.

5. Dispositif selon une des revendications 1 à 4,
**caractérisé en ce que**
l'on a disposé la première et la deuxième bande de transport (1, 6) essentiellement de façon horizontale ; la deuxième bande de transport (6) s'étendant, de préférence, de façon transversale par rapport à la première bande de transport (1).

6. Dispositif selon une des revendications 1 à 5,
**caractérisé en ce que**
l'extrémité (11), située du coté de la sortie, de la deuxième bande de transport (6) est disposée au dessus de la station d'emballage (3).

7. Dispositif selon la revendication 6,
**caractérisé en ce que**
la station d'emballage (3) comporte un entonnoir de remplissage (9).

8. Dispositif selon une des revendications 1 à 7,
**caractérisé en ce que**
l'on peut positionner dans la station d'emballage, une coupelle de réception (10), éventuellement en interposant un entonnoir de remplissage sous l'extrémité (11) située du coté de la sortie de la deuxième bande de transport (6), ou sous au moins un compartiment (4) du dispositif de tri amorti (2).

9. Dispositif selon la revendication 8,
**caractérisé en ce que**
la coupelle de réception (10) comporte des compartiment individuels (12).

10. Dispositif selon la revendication 8 ou 9,
**caractérisé en ce que**
l'on peut décaler la coupelle de réception (10) au moins dans une direction (A ou B).
